Europäisches Patentamt

European Patent Office

Office européen des brevets

(19)

(11) Veröffentlichungsnummer: **0 024 684**
**B1**

(12) **EUROPÄISCHE PATENTSCHRIFT**

(45) Veröffentlichungstag der Patentschrift:
25.05.83

(51) Int. Cl.³: **F 16 J 12/00**, B 01 J 3/04

(21) Anmeldenummer: 80104946.1

(22) Anmeldetag: 20.08.80

(54) Schnellverschlussvorrichtung für Druckbehälter.

(30) Priorität: 29.08.79 DE 2934789

(43) Veröffentlichungstag der Anmeldung:
11.03.81 Patentblatt 81/10

(45) Bekanntmachung des Hinweises auf die Patenterteilung:
25.05.83 Patentblatt 83/21

(84) Benannte Vertragsstaaten:
CH DE GB LI

(56) Entgegenhaltungen:
EP-A-0 002 186
BE-A-728 428
DE-A-2 034 911
GB-A-1 274 407
US-A-3 404 796
CHEMIE-INGENIEUR-TECHNIK, Band 41, August
1969, Weinheim D. L. RELYEA et al., Zusammenfassung Nr. U 02558, Seite 526, Spalte 2

(73) Patentinhaber: HOECHST AKTIENGESELLSCHAFT,
Postfach 80 03 20, D-6230 Frankfurt/Main 80 (DE)

(72) Erfinder: Tetzlaff, Karl-Heinz, Mörikestrasse 3,
D-6233 Kelkheim (Taunus) (DE)
Erfinder: Riemenschneider, Wilhelm, Dr.,
Loreleistrasse 45, D-6230 Frankfurt am Main 80 (DE)
Erfinder: Leuschner, Günter, Am Sandring 36,
D-6231 Schwalbach (DE)

## Schnellverschlußvorrichtung für Druckbehälter

Bei bekannten Druckbehältern für chemische Reaktionen ist es zur Reinigung und Neubeschickung notwendig, die Anschlußleitungen zu entfernen und den Hauptflansch zu öffnen. Dies erfordert besonders bei diskontinuierlichem Betrieb einen großen, als verloren zu betrachtenden Zeitaufwand für Montagearbeiten, der bei kurzzeitigen Reaktionsabläufen besonders ins Gewicht fällt. Darüber hinaus fallen Reparaturen vor allem an den Hochdruckanschlüssen durch die häufigen Montagen vermehrt an.

Es sind ferner Druckvorrichtungen bekannt, bei denen der Verschlußdeckel an den Druckbehälter gepreßt wird, mit ihm also nicht mechanisch verbunden ist. So ist in der EP-A-2 186 eine Vorrichtung vorgeschlagen worden, die im wesentlichen aus einem fest montierten Druckgefäß und einem als Deckellaufwagen ausgebildeten Verschluß besteht, der seitlich leicht zu bewegen ist.

In der DE-B-2 034 911 ist eine Vorrichtung beschrieben, bei der zwei Druckbehälter-Unterteile auf einer Schiebeführung seitlich bewegbar so angebracht sind, daß jeweils ein Unterteil durch eine fest montierte, mit einem Abdeckungs-Hebesystem versehene Verschlußvorrichtung geschlossen, während der andere Behälter offen ist.

Eine seitliche Verschiebung des Deckels oder der Behälter-Unterteile ist jedoch dann nicht möglich, wenn Einbauten wie zum Beispiel Thermometer, Steigrohr, Kühlschlange, Rührantrieb etc. in das Behälterunterteil hineinragen, oder wenn beispielsweise Heiz- und Kühleinrichtungen nicht nur das Behälter-Unterteil, sondern auch über die Dichtungsebene hinaus den Deckel bzw. das Oberteil des Behälters umgeben. Außerdem erlauben es diese Vorrichtung nicht, das Druckbehälter-Unterteil völlig herauszunehmen.

In den vielen Fällen, in denen nun aber entweder auf Einbauten im Druckbehälter oder auf wirksame Heiz- und Kühleinrichtungen oder auf die Möglichkeit der Entnahme des Druckbehälter-Unterteils nicht verzichtet werden kann, ist die Verwendung dieser bekannten Vorrichtungen nachteilig oder gar unmöglich.

Gegenstand der Erfindung ist nun eine Schnellverschlußvorrichtung für einen Druckbehälter, bestehend aus einer Haltevorrichtung, an die das Anschlußleitungen und/oder Meßgeräte enthaltende Oberteil des Druckbehälters fest montiert ist, einer Druckvorrichtung, mittels der das Unterteil des Druckbehälters und das Oberteil des Druckbehälters fest zusammenpreßbar sind und einem zwischen dem herausnehmbaren Unterteil des Druckbehälters und der Druckvorrichtung befindlichen, bei Entlastung verschiebbaren Distanzstück, wobei die am Oberteil des Druckbehälters befindlichen Anschlußleitungen und/oder Meßgeräte sämtlich oder zum Teil in das Unterteil des Druckbehälters hineinragen, und/oder wobei nicht nur das Unterteil des Druckbehälters, sondern auch über die Dichtungsebene hinaus das Oberteil des Druckbehälters von einer Heiz- und/oder Kühleinrichtung umgeben ist.

Mit der erfindungsgemäßen Schnellverschlußvorrichtung werden die eingangs geschilderten Nachteile bekannter Druckbehälter vermieden und die Durchführung von chemischen Reaktionen unter hohem Druck wesentlich beschleunigt und erleichtert.

Die Haltevorrichtung ist ein festes Gestell, in dem die übrigen Teile der erfindungsgemäßen Schnellverschlußvorrichtung, der Druckbehälter, das Distanzstück und die Druckvorrichtung angebracht sind. Sie besteht vorzugsweise aus zwei Platten, die über Schrauben verbunden sind. Die beiden Platten können aber auch durch weitere massive Platten oder Stege bzw. bei Verwendung runder Platten durch einen Metallzylinder oder ähnliches verbunden werden, sofern nach einer Seite, vorteilhafterweise aber nach zwei Seiten Aussparungen angebracht sind, die eine Herausnahme des unteren Teils des Druckbehälters sowie ggf. des Distanzstückes ermöglichen.

An eine der beiden über Schrauben oder in anderer geeigneter Weise verbundenen Platten ist das Oberteil des Druckbehälters fest montiert (im folgenden der Einfachheit halber auch als obere Platte bezeichnet). Durch diese Platte und den Oberteil des Druckbehälters werden Anschlußleitungen und Meßgeräte hindurchgeführt.

In einer der beiden Platten, vorzugsweise in der Platte, die der das Oberteil des Druckbehälters tragenden Platte gegenüberliegt (im folgenden auch als untere Platte bezeichnet) ist eine Druckvorrichtung angebracht. Im einfachsten Fall besteht diese aus einer oder mehreren Druckschrauben, die Oberteil und Unterteil des Druckbehälters über ein Distanzstück zusammenpressen. Bei höheren Anforderungen verwendet man jedoch solche Druckvorrichtungen, die auf pneumatischer oder hydraulischer Basis arbeiten, wie z. B. Hydraulikmuttern oder -zylinder. Die Druckvorrichtung kann auch aus mehreren Hydraulikmuttern bestehen, die die beiden Platten mittels der zugehörigen Schrauben zusammenpressen. Die Verwendung einer zentral in der unteren Platte angeordneten Druckvorrichtung ist jedoch günstiger, da eine Einheit benötigt wird und bei Verwendung einer pneumatischen oder hydraulischen Vorrichtung, diese durch eine einzige, ohne Werkzeug zu bedienende Schraube unterstützt werden kann. Der pneumatische oder hydraulische Druck wird dann lediglich zum Vorspannen benutzt.

Zwischen Druckbehälter und Druckvorrichtung ist ein Distanzstück angeordnet, das herausnehmbar bzw. verschiebbar ist. Auf diese Weise wird Platz geschaffen, um das Unterteil des Druckbehälters herauszunehmen. Die Länge des Distanzstückes soll so gewählt werden, daß das Unterteil des Behälters nach dem Absenken herausgenommen werden kann, ohne zum Beispiel von Thermometerrohren oder Heizmänteln behindert zu werden. Das Distanzstück wird vorteilhafterweise seitlich herausgenommen bzw. verschoben. Es kann aber auch mittels z. B. einer bajonettartigen Einrichtung nach unten verschoben werden, wenn entsprechende Aussparungen in dem das Distanzstück tragenden Teil angebracht werden. Das Distanzstück kann gleichzeitig eine Heizung, eine Kühlung und auch einen Antrieb für einen Magnetrührer enthalten.

Das Unterteil des Druckbehälters, das eigentliche Reaktionsgefäß, wird durch die Druckvorrichtung über das Distanzstück gegen das an der Haltevorrichtung fest montierte Oberteil des Druckbehälters angepreßt. Zwischen Ober- und Unterteil des Druckbehälters befindet sich eine Dichtung, zu deren genau bemessener Verformung es zweckmäßig ist, als Druckvorrichtung pneumatische oder hydraulische Geräte einzusetzen. Heiz- und Kühleinrichtungen können den unteren Teil des Druckbehälters umgeben und sind z. B. über Zugfedern an der Haltevorrichtung befestigt.

Zur thermischen Isolierung können oberhalb und unterhalb des Druckbehälters Isolierschichten angeordnet werden. Falls diese Schichten nicht schon durch die Materialwahl, z. B. It-Platten, eine zur Abdichtung von Unter- und Oberteil des Druckbehälters erwünschte Elastizität aufweisen, können die zugbelasteten Teile, also die Verbindungen der beiden Platten der Haltevorrichtung, und/oder die druckbelasteten Teile federnde Elemente, wie z. B. Dehnschrauben und/oder federnde Scheiben enthalten.

Die geschilderte Vorrichtung ermöglicht ein sehr schnelles Öffnen und Verschließen des Druckbehälters ohne Werkzeug und ohne Demontage von Rohrleitungen oder Armaturen. Überwachungsgeräte können fest in einer Anzeigetafel bzw. in einem zentralen Steuerpult verbleiben. Diese Eigenschaften ermöglichen eine besonders vorteilhafte und effektive Verwendung der erfindungsgemäßen Vorrichtung beim Einsatz von Hochdruckversuchsbehältern.

Bei Verwendung der erfindungsgemäßen Schnellverschlußeinrichtung bei Durchführung von Versuchen unter hohem Druck wird kein technisches Personal benötigt. Die Anzahl der je Druckbehälter täglich gefahrenen Chargen läßt sich aufgrund des sehr einfachen und schnellen Ein- und Ausbaus des Reaktionsgefäßes, also des Unterteils des Druckbehälters, wesentlich erhöhen. Die Verwendung des Distanzstückes in der erfindungsgemäßen Vorrichtung verkürzt außerdem den Arbeitsweg der Druckvorrichtung, wodurch die Anwendung einfacher Kurzhubgeräte und kleiner Hydraulikpumpen mit sehr kleinem Fördervolumen bei hohen Drucken ermöglicht wird. Auch die Bauhöhe der erfindungsgemäßen Vorrichtung kann durch die Verwendung des Distanzstückes gering gehalten werden.

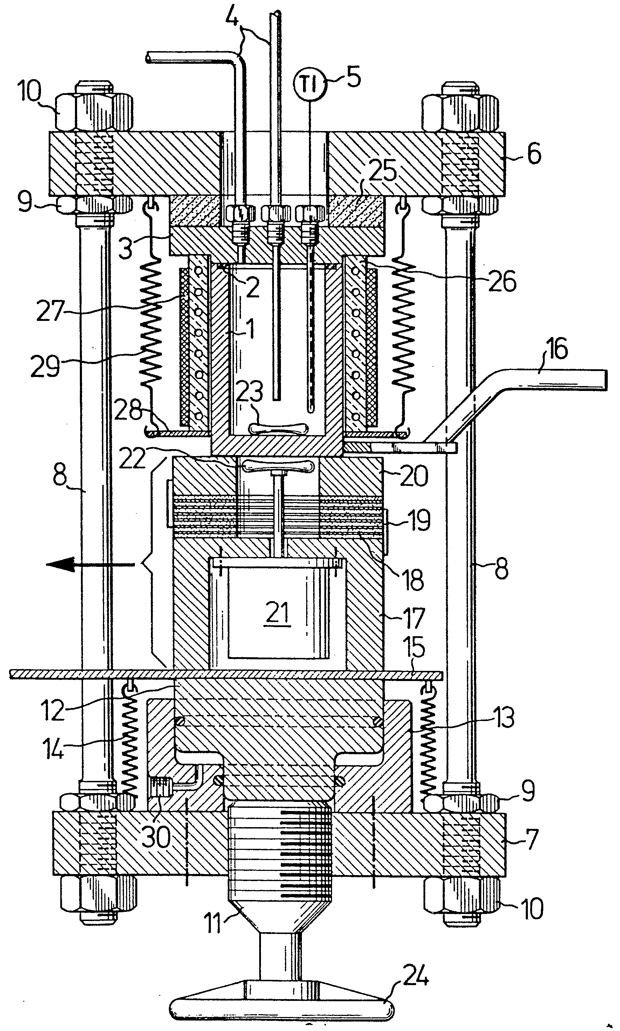

Eine besonders vorteilhafte Ausführungsform der erfindungsgemäßen Schnellverschlußvorrichtung ist in Figur 1 beispielshaft beschrieben:

Der Druckbehälter, bestehend aus Unterteil 1, Oberteil 3 und Dichtung 2, ist an ein feststehendes Leitungssystem 4 mit Thermometertauchrohr 5 angeschlossen. Das Leitungssystem 4 und die Platte 6 ist in einem nicht dargestellten Gestell oder geeignetem Stativ befestigt. Da die Platten 6 und 7 beim Betrieb des Druckbehälters Druckkräfte aufnehmen müssen, sind sie durch die Schrauben 8 und die Muttern 9 und 10 gegenseitig verspannt. Die Mutter 9 dient lediglich dazu, nach dem Ausbau des Unterteils 1 des Druckbehälters eine gewisse Steifigkeit zu gewährleisten. Die Platte 7 trägt eine Druckvorrichtung, die über das aus mehreren Zwischenstücken bestehende Distanzstück das Unterteil 1 gegen den Deckel 3 preßt. Die Spannkräfte können durch eine oder mehrere Schrauben 11 erzeugt werden. Bei hohen Drucken ist es jedoch von Vorteil, die Spannkräfte durch einen Hydraulikkolben 12 und Zylinder 13 zu erzeugen, und die Schraube 11 lediglich zur Entlastung zu verwenden. Dadurch braucht das Hydrauliköl, das über Anschluß 30 dem Zylinder 13 zugeführt wird, nicht dauernd unter Druck gehalten zu werden. Soll die Spannvorrichtung entspannt werden, so ist es vorteilhaft, nochmals kurzzeitig Öldruck aufzugeben. Die Schraube 11 kann so mühelos mittels Handrand 24 gelockert werden. Die Rückholfedern 14 bringen den Kolben 12 wieder in seine Ausgangslage zurück. Das durch eine Klammer angedeutete Distanzstück (Teile 17 bis 22) kann nun in Pfeilrichtung auf einem Blech 15 verschoben werden. Jetzt kann das Unterteil 1 des Druckbehälters nach unten abgesenkt und zur Reinigung oder Neubeschickung entnommen werden. Bei kleinen Behältern ist dazu ein Handgriff 16 ausreichend. Das Distanzstück besteht im einzelnen aus einem Hohlzylinder 17, der einen Rührmotor 21 mit Magnetstab 22 trägt, einer Scheibe 20 und einer wärmeisolierenden Schicht 18. Diese Schicht ist aus mehreren It-Platten und zwischengelegten Dünnblechen aufgebaut. Zur besseren Zentrierung sind mehrere Blechstreifen 19 auf dem Umfang der Platten angeordnet. Die Wärmeisolation kann aber auch aus einem anderen massiven Material bestehen, wie das bei Teil 25 oberhalb des Deckels 3 angedeutet ist. Zur Temperaturführung dient eine Kühleinrichtung 26 und eine Heizeinrichtung 27, die von einer Scheibe 28 und einer Feder 29 getragen werden. Der Magnetstab 23 ist das zum Magnetrührer gehörende Rührorgan.

## Patentansprüche

1. Schnellverschlußvorrichtung für einen Druckbehälter, bestehend
aus einer Haltevorrichtung, an die das Anschlußleitungen (4) und/oder Meßgeräte (5) enthaltende Oberteil (3) des Druckbehälters fest montiert ist, und
einer Druckvorrichtung (12, 13), mittels der das Unterteil (1) und das Oberteil (3) des Druckbehälters fest zusammenpreßbar sind,
dadurch gekennzeichnet, daß sich zwischen der Druckvorrichtung (12, 13) und dem herausnehmbaren Unterteil (1) des Druckbehälters ein bei Entlastung verschiebbares Distanzstück (17—22) befindet und die am Oberteil (3) des Druckbehälters befindlichen Anschlußleitungen (4) und/oder Meßgeräte (5) sämtlich oder zum Teil in das Unterteil (1) des Druckbehälters hineinragen und/oder nicht nur das Unterteil (1) des Druckbehälters, sondern auch über die Dichtungsebene hinaus das Oberteil (3) des Druckbehälters von einer Heiz- (27) und/oder Kühleinrichtung (26) umgeben ist.

2. Schnellverschlußvorrichtung nach Anspruch 1, dadurch gekennzeichnet, daß sie als Druckvorrichtung (12, 13) eine oder mehrere Druckschrauben (11) enthält.

3. Schnellverschlußvorrichtung nach Anspruch 1, dadurch gekennzeichnet, daß sie als Druckvorrichtung (12, 13) eine oder mehrere pneumatische oder hydraulische Vorrichtungen enthält.

4. Schnellverschlußvorrichtung nach Anspruch 3, dadurch gekennzeichnet, daß die pneumatischen oder hydraulischen Druckvorrichtungen durch eine oder mehrere Druckschrauben (11) entlastbar sind.

5. Schnellverschlußeinrichtung nach Anspruch 1, dadurch gekennzeichnet, daß die Druckvorrichtung (12, 13) zentral in der Haltevorrichtung angeordnet ist.

6. Schnellverschlußvorrichtung nach Anspruch 1, dadurch gekennzeichnet, daß zwischen der Haltevorrichtung und dem Oberteil (3) des Druckbehälters und/oder zwischen dem Unterteil (1) des Druckbehälters und dem Distanzstück (17—22) und/oder auf bzw. im Distanzstück (17—22) als ein Teil desselben eine wärmeisolierende Schicht (18) angebracht ist.

7. Schnellverschlußvorrichtung nach Anspruch 1, dadurch gekennzeichnet, daß die zug- und/oder druckbelasteten Bauteile elastische Elemente enthalten.

8. Schnellverschlußvorrichtung nach Anspruch 1, dadurch gekennzeichnet, daß das Distanzstück (17—22) einen Rührantrieb (21) enthält.

9. Schnellverschlußeinrichtung nach Anspruch 1, dadurch gekennzeichnet, daß das Distanzstück (17—22) eine Heiz- und/oder Kühleinrichtung enthält.

## Claims

1. Quick-action locking means for a pressure vessel consisting of
a holder to which the top (3) of the pressure vessel containing connections (4) and/or measuring equipments (5) is rigidly mounted, and
a presser (12, 13) by means of which the lower part (1) and the top (3) of the pressure vessel are tightly compressible
characterized in that a spacer device (17—22) which is slidable after decompression is positioned between the presser (12, 13) and the detachable lower part (1) of the pressure vessel and all or some of the connections (4) and/or measuring equipments (5) project into the lower part (1) of the pressure vessel and/or a heating (27) and/or a cooling (26) equipment surround not only the lower part (1) of the reaction vessel but also, beyound the sealing plane, the top (3) of the pressure vessel.

2. The quick-action locking means as claimed in Claim 1, characterized by containing as presser (12, 13) one or more pressure screws (11).

3. The quick-action locking means as claimed in Claim 1, characterized by containing as presser (12, 13) one or more pneumatic or hydraulic devices.

4. The quick-action locking means as claimed in Claim 3, characterized in that the pneumatic or hydraulic pressers can be relieved by one or more pressure screws (11).

5. The quick-action locking means as claimed in Claim 1, characterized in that the presser (12, 13) is centrally arranged in the holder.

6. The quick-action locking means as claimed in Claim 1, characterized in that a heat insulating layer (18) is provided between the holder and the top (3) of the pressure vessel and/or between the lower part (1) of the pressure vessel and the spacer device (17—22) and/or on or in the spacer device (17—22) as a part of it.

7. The quick-action locking means as claimed in Claim 1, characterized in that the component parts subjected to tension or compression contain elastic elements.

8. The quick-action locking means as claimed in Claim 1, characterized in that the spacer divice (17—22) contains a drive (21) for a stirrer.

9. The quick-action locking means as claimed in Claim 1, characterized in that the spacer device (17—22) contains a heating and/or cooling equipment.

## Revendications

1. Système de fermeture rapide à utiliser pour un récipient sous pression, constitué d'un dispositif de support relié rigidement à la partie supérieure (3) du récipient sous pression équipée de conduits de raccordement (4) et/ou d'appareils de mesure (5) et d'un dispositif de compression (12, 13) capable de comprimer fortement la partie inférieure (1) et la partie supérieure (3) du récipient sous pression, système caractérisé en ce qu'une pièce intercalaire (17—22) déplaçable par glissement en cas de décharge est placée entre le récipient sous pression (12, 13) et la partie inférieure (1) du récipient sous pression à enlever, en ce que les conduits de raccordement (4) et/ou les appareils de mesure (5) desquels est muni la partie supérieure (3) du récipient sous pression pénètrent totalement ou partiellement dans la partie inférieure (1) du récipient sous pression et/ou en ce que non seulement la partie inférieure (1) du récipient sous pression mais aussi, au-delà du plan d'étanchéité, la partie supérieure (3) du récipient sous pression sont entourées d'un élément chauffant (27) et/ou d'un élément réfrigérant (26).

2. Système de fermeture rapide selon la revendication 1, caractérisé en ce qu'il comprend une ou plusieures vis de pression (11) en tant que dispositif de compression (12, 13).

3. Système de fermeture rapide selon la revendication 1, caractérisé en ce qu'il comprend un ou plusieurs dispositifs pneumatiques ou hydrauliques en tant que dispositif de compression (12, 13).

4. Système de fermeture rapide selon la revendication 3, caractérisé en ce que l'on peut décharger les dispositifs pneumatiques ou hydrauliques par une ou plusieures vis de pression (11).

5. Système de fermeture rapide selon la revendication 1, caractérisé en ce que le dispositif de compression (12, 13) est disposé de manière centrale dans le dispositif de support.

6. Système de fermeture rapide selon la revendication 1, caractérisé en ce qu'une couche calorifuge (18) est disposée entre le dispositif de support et la partie supérieure (3) du récipient sous pression et/ou entre la partie inférieure (1) du récipient sous pression et la pièce intercalaire (17—22) et/ou sur ou à l'intérieur de la pièce intercalaire (17—22), cette couche calorifuge (18) étant dans le dernier cas un élément constitutif de la pièce intercalaire (17—22).

7. Système de fermeture rapide selon la revendication 1, caractérisé en ce que les éléments de construction soumis à une contrainte de traction et/ou de compression contiennent des éléments élastiques.

8. Système de fermeture rapide selon la revendication 1, caractérisé en ce que la pièce intercalaire (17—22) est munie d'un organe moteur (21) d'un agitateur.

9. Système de fermeture rapide selon la revendication 1, caractérisé en ce que la pièce intercalaire (17—22) est munie d'un élément chauffant et/ou d'un élément réfrigérant.